(19) Europäisches Patentamt — European Patent Office — Office européen des brevets

(11) **EP 4 160 139 B1**

(12) **EUROPÄISCHE PATENTSCHRIFT**

(45) Veröffentlichungstag und Bekanntmachung des Hinweises auf die Patenterteilung:
**15.04.2026   Patentblatt 2026/16**

(21) Anmeldenummer: **22198303.4**

(22) Anmeldetag: **28.09.2022**

(51) Internationale Patentklassifikation (IPC):
*G01B 11/06* (2006.01)      *G01B 11/02* (2006.01)
*B29C 48/92* (2019.01)      *G01N 21/3581* (2014.01)
*G01N 21/88* (2006.01)      *G01N 21/89* (2006.01)
*G01N 21/952* (2006.01)

(52) Gemeinsame Patentklassifikation (CPC):
**G01B 11/026; G01B 11/06; G01N 21/3581;
G01N 21/8901; G01N 21/952;** G01B 2210/44;
G01N 21/8914

(54) **THZ-MESSVORRICHTUNG UND  VERFAHREN ZUM VERMESSEN EINES MESSOBJEKTES**

THZ MEASURING DEVICE AND METHOD FOR MEASURING AN OBJECT

DISPOSITIF DE MESURE THZ ET PROCÉDÉ DE MESURE D'UN OBJET

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität:   **29.09.2021   DE 102021125196**

(43) Veröffentlichungstag der Anmeldung:
**05.04.2023   Patentblatt 2023/14**

(73) Patentinhaber: **CiTEX Holding GmbH
49324 Melle (DE)**

(72) Erfinder:
• **Neumeister, Arno
32457 Porta Westfalica (DE)**
• **Klose, Ralph
49324 Melle (DE)**

(74) Vertreter: **Bremer, Ulrich
Advopat
Patent- und Rechtsanwälte
Theaterstraße 6
30159 Hannover (DE)**

(56) Entgegenhaltungen:
WO-A1-2021/259426      DE-A1- 102016 105 599
DE-A1- 102018 128 248      DE-B3- 102020 123 992
US-A1- 2012 032 083      US-A1- 2012 217 403
US-A1- 2016 315 716      US-A1- 2021 262 792

## Beschreibung

Die Erfindung betrifft eine THz-Messvorrichtung sowie ein THz-Messverfahren zum Vermessen eines Messobjektes. Das Messobjekt kann insbesondere kontinuierlich durch einen Messraum der THz-Messvorrichtung geführt werden. Es kann insbesondere eine Schichtdicke und/oder eine Materialeigenschaft des Messobjektes vermessen werden.

THz-Messungen werden unter anderem zur kontinuierlichen Vermessung von geförderten Messobjekten eingesetzt. So können Stränge, z. B. Rohre, Profile oder Kabel aus einem Material wie Kunststoff oder Gummi nach ihrer Herstellung kontinuierlich auf ihre geometrische Ausbildung und mögliche Fehler vermessen werden. So kann die THz-Strahlung an Grenzflächen reflektiert und nachfolgend detektiert wird. Wenn die Lichtgeschwindigkeit der THz-Strahlung in dem Material bekannt ist, können aus gemessenen Laufzeitunterschieden der detektierten THz-Strahlung nachfolgend Schichtdicken und/oder Durchmesser ermittelt werden. Zum Teil ist die Lichtgeschwindigkeit in dem Material jedoch nicht genau bekannt, insbesondere bei einem Material unbekannter Temperatur und bei Materialmischungen.

Aus der WO 2016/139155 A1 ist bekannt, zunächst eine Kalibriermessung des leeren Messraums ohne das Messobjekt durchzuführen, indem ein THz-Transceiver THz-Strahlung durch den Messraum zu einem Referenzspiegel sendet, und die vom Referenzspiegel zurück zum THz-Transceiver reflektierte Strahlung nachfolgend detektiert wird. Es ergibt sich somit ein Messsignal mit einem Totalreflexions-Peak. Nachfolgend erfolgt eine Objektmessung durch denselben THz-Transceiver bei einem aufgenommenen Rohr. Hierbei sendet derselbe THz-Transceiver wiederum die THz-Strahlung durch die beiden Wandbereiche des Rohres zu dem Referenzspiegel, der die Strahlung zurück durch das Messobjekt zu dem THz-Transceiver sendet. Aus diesen Messungen können nachfolgend Schichtdicken und Materialeigenschaften bestimmt werden.

Bei derartigen Vermessungen ergeben jedoch sich Schwierigkeiten insbesondere bei Fehlern im Material und stärkerer Absorption durch das Material. Auch ist die genaue Ausrichtung der Komponenten aufwändig.

DE 10 2017 125 740 A1 beschreibt eine THz-Messvorrichtung zum Messen mindestens einer Schichtdicke eines entlang einer Förderrichtung geförderten Messobjektes, mit einem THz-Haupt-Sensor zum Aussenden eines THz-Hauptstrahls entlang einer ersten optischen Achse in einer Detektionsebene senkrecht zu der Förderrichtung und zum Empfangen von entlang der ersten optischen Achse reflektierter THz-Strahlung, sowie mit mindestens einem THz-Zusatz-Sensor zum Aussenden eines THz-Zusatz-Strahls entlang einer zweiten optischen Achse (A2), die außerhalb der Detektionsebene und/oder zu der Detektionsebene geneigt verläuft, zur Detektion der entlang der zweiten optischen Achse zurück reflektierten THZ-Zusatz-Strahlung. In einer Signalamplitude des THz-Zusatz-Sensors können Zusatz-Reflexionspeaks ermittelt werden, die von Fehlstellen in dem Messobjekt stammen.

DE 10 2018 124 175 A1 beschreibt ein Verfahren zum Steuern einer Produktionsanlage für plattenförmige oder strangförmige Körper, bei dem der Körper entlang einer Förderrichtung durch einen Messbereich gefördert und mittels Messstrahlung im Gigahertz- oder Terahertz-Frequenzbereich bestrahlt wird, wobei die Messstrahlung zumindest teilweise in den Körper eindringt, und bei dem von dem Körper reflektierte Messstrahlung detektiert wird und anhand der detektierten Messstrahlung der Brechungsindex des Körpers und/oder die Absorption der Messstrahlung durch den Körper bestimmt wird, wobei auf Grundlage der Brechungsindexbestimmung und/oder der Absorptionsbestimmung mindestens ein Produktionsparameter der Produktionsanlage gesteuert wird. Somit erfolgt auch hier eine Messung von Schichtdicken durch Detektion der an Grenzflächen reflektierten Strahlung.

US 2021/0262792 A1 beschreibt eine Vorrichtung zum Vermessen einer Oberfläche mit ersten Sensoren, die zweidimensional in einem Raum verteilt sind, wobei die ersten Sensoren mit der Oberfläche auf eine kontaktlose Weise unter Verwendung von elektromagnetischen Signalen in Mikrowellen-Bereich zusammenwirken, und wobei die ersten Sensoren aus der Interaktion Signale mit Informationen zu dem Abstand zwischen den Sensoren aufnehmen. Hierbei ist eine Messung zwischen den gegenüberliegenden Sensoren ohne Messobjekt vorgesehen, weiterhin eine Messung, bei denen Kanten einer Metallplatte von beiden Seiten her vermessen werden, um nachfolgend eine Differenz zu bilden.

Aus US 2012/0032083 A1 ist es bekannt, Terahertz-Strahlen auf Basis einer Side-Domain-Spektroskopie zu erzeugen, wobei eine Spannung über eine Schalteinrichtung angelegt wird, die eine fotoleitfähige Fläche aufweist, die nachfolgend mit Licht bestrahlt wird und hierdurch die Erzeugung von Strömen ermöglicht, die zu der Ausbildung der Terahertz-Strahlung führen.

US 2016/0315716 A1 beschreibt ein System zum Aussenden und Empfangen elektromagnetischer Strahlung unter Verwendung eines Strahlenteilers und eines Transceivers. Der Strahlenteiler teilt einen optischen Impuls in einem Pump-Puls und einen Sonden-Puls auf. Hierdurch kann eine Probe vermessen werden und über den Pump-Puls und den Sonden-Puls nachfolgend die Laufzeit zu einer Probe und zurück detektiert werden.

US 2012/0217403 A1 beschreibt die Vermessung eines Objektes mit THz-Strahlung mittels eines Phasen-sensitiven THz-Empfängers. Somit kann eine Zeit-Verzögerung oder ein Phasen-Offset, der durch das Objekt bewirkt wird, für einen ersten Frequenzteil gemessen werden und hieraus eine Material-Schichtdicke ermittelt werden. Indem zwei unterschiedliche Frequenz-Bereiche verwendet werden, kann somit eine Vermessung des Objektes erfolgen, bei den ergänzend der Absorptionskoeffizient ermittelt wird. Durch die Messung wird eine Abschwächung des empfangenen Signals für wenigstens den zweiten Frequenzbereich ermittelt.

DE 10 2020 123 992 B3 beschreibt eine THz-Messvorrichtung und ein THz-Messverfahren zur Vermessung von Prüfobjekten, bei den von gegenüberliegenden THz-Transceivern Strahlung durch das Messobjekt gesendet wird; die THz-Strahlung wird von den beiden THz-Transceivern mit unterschiedlichen Polarisationen ausgegeben, damit sich die Strahlung nicht gegenseitig beeinflusst. Die von jedem THz-Transceiver ausgegebene Strahlung wird von einem hinter dem Messobjekt vorgesehenen Reflektor zu dem jeweiligen Transceiver zurückreflektiert.

Der Erfindung liegt die Aufgabe zugrunde, eine THz-Messvorrichtung und ein THz-Messverfahren zum Vermessen von Messobjekten zu schaffen, die eine genaue Vermessung von Messobjekten mit geringem Aufwand ermöglichen.

Diese Aufgabe wird durch eine THz-Messvorrichtung und ein THz-Messverfahren nach den unabhängigen Ansprüchen gelöst. Weiterhin ist eine Anordnung aus der THz-Messvorrichtung und einem aufgenommenen Messobjekt vorgesehen. Die Unteransprüche beschreiben bevorzugte Weiterbildungen.

Die erfindungsgemäße THz-Messvorrichtung kann insbesondere mit einem erfindungsgemäßen THz-Messverfahren durchgeführt werden. Das erfindungsgemäße THz-Messverfahren kann insbesondere unter Einsatz einer erfindungsgemäßen THz-Messvorrichtung durchgeführt werden.

Die erfindungsgemäße Messanordnung umfasst die THz-Messvorrichtung mit Messobjekt, und gegebenenfalls eine Fördereinrichtung und/oder Produktionseinrichtung zur Produktion des Messobjektes, z. B. einen Extruder.

Als Messobjekt kann insbesondere ein Strang vermessen werden, der insbesondere kreisförmig oder rechteckig sein kann. Als Strang können insbesondere vermessen werden: ein Rohr, Profil, Kabel, Schlauch, Folie, weiterhin z. B. auch ein halboffenes Profil wie eine Rinne. Das Material kann Kunststoff, Gummi, Zellulose, Keramik oder ein anderes für THz-Strahlung durchlässiges Material sein. Erfindungsgemäß können insbesondere geometrische Eigenschaften wie Wanddicken, Außendurchmesser, Innendurchmesser ermittelt werden, und weiterhin Materialeigenschaften wie ein Brechungsindex und/oder eine Lichtgeschwindigkeit. Weiterhin können Fehler des Messobjektes wie Einschlüsse, Luftblasen und/oder Verformungen der Grenzflächen erfasst werden.

Das Messobjekt kann insbesondere fortlaufend durch den Messraum verfahren und kontinuierlich vermessen werden, insbesondere nach seiner Herstellung, z. B. nach der Extrusion des Stranges. Es können insbesondere Änderungen, Abweichungen und ggf. Fehler fortlaufend und insbesondere durch einen Vergleich der Messsignale erfasst werden.

Bei dem erfindungsgemäßen Verfahren sind aufeinander folgende Schritte einer Leermessung bzw. Kalibriermessung mit einem leeren Messraum, d. h. ohne aufgenommenes Messobjekt, und mindestens einer nachfolgenden Objektmessung vorgesehen.

Die erfindungsgemäße Vorrichtung weist somit mindestens ein Paar von THz- Transceivern auf, d.h. einen ersten und zweiten THz-Transceiver, die mit einem Messraum zwischen sich und gegenüber liegend mit gemeinsamer optischer Messachse angeordnet sind. Hierbei kann zumindest der zweite Transceiver die von dem ersten Transceiver ausgesandte Strahlung detektieren. Die beiden THz-Transceiver werden durch eine Synchronisier-Einrichtung synchronisiert, um Laufzeiten und/oder Änderungen der Laufzeiten in den verschiedenen Schritten zu ermitteln. Die Synchronisier-Einrichtung bewirkt vorzugsweise eine zeitliche Abstimmung der von dem ersten und zweiten THz- Transceiver ermittelten und/oder festgelegten Zeitpunkte. Die Synchronisier-Einrichtung gibt hierzu Synchronisier-Signale an den ersten Transceiver und den zweiten Transceiver aus, damit gleiche oder vergleichbare Zeitpunkte festgelegt werden können. Erfindungsgemäß wird hierbei insbesondere auch erkannt, dass wichtiger als die Festlegung eines genauen Zeitpunktes eine Vergleichbarkeit der Messungen ist, da bei der Differenzbildung systematische Abweichung eliminiert werden können.

Bei der Leermessung wird THz-Strahlung von dem ersten THz-Transceiver entlang der optischen Messachse durch den leeren Messraum zu dem zweiten THz-Transceiver ausgegeben und eine Leer-Laufzeit durch den Messraum ermittelt. Es erfolgt somit keine Reflexion der ausgegebenen THz-Strahlung, um sie zu dem sendenden Transceiver zurückzuleiten.

Bei dem Schritt der Messung der Gesamtlaufzeit wird bei gegenüber der Leermessung unveränderter Messvorrichtung durchgeführt, wobei das Messobjekt durch den Messraum geführt wird. Somit gibt der erste THz-Transceiver die THz-Strahlung entlang der optischen Messachse durch den Messraum und durch das Messobjekt zu dem zweiten THz-Transceiver aus, der wiederum eine Laufzeit der THz-Strahlung ermittelt. Somit kann bei unveränderter Messvorrichtung ein genauer Vergleich der Leermessung und der Messung mit Messobjekt erfolgen.

Weiterhin erfolgen Messungen von zwei Wandlaufzeiten des Messobjektes, bei denen insbesondere jeweils der dem THz-Transceiver gegenüberliegender Wandbereich in Reflexion vermessen wird. Somit gibt der erste und zweite THz-Transceiver jeweils THz-Strahlung aus, die an den Grenzflächen des Wandbereichs zu dem THz-Transceiver zurück reflektiert wird.

Erfindungsgemäß ist somit eine messtechnisch zunächst etwas aufwändigere Ausbildung der Synchronisation vorgesehen, wobei sich erfindungsgemäß aber auch einige Vorteile ergeben. Insbesondere können gegenüber der eingangs genannten WO 2016/139155 A1 Messungen durchgeführt werden, bei denen die THz-Strahlung die Wandbereiche nicht mehrfach durchläuft.

So werden bei der Messung der Gesamt-Laufzeit die beiden Wandbereichen jeweils einmal von der THz-Strahlung durchlaufen. Indem bei den Messungen der Wandlaufzeiten jeder Wandbereich von dem THz-Transceiver vermessen wird, der dem Wandbereich gegenüber bzw. näher liegt, ist es nicht erforderlich, dass die THz-Strahlung zunächst einen ersten Wandbereich durchquert, um eine Einzelmessung des hinteren Wandbereichs durchzuführen. So können insbesondere auch Rohre mit höherem Ruß-Gehalt und/oder bei Feuchtigkeit trotz der Absorption durch die Materialien sicher vermessen werden.

Die Messung der Gesamt-Laufzeit kann mit einer der beiden Messungen der Wandlaufzeit kombiniert werden, so dass der erste THz-Transceiver hier zum einen die Strahlung in Transmission zu dem zweiten THz-Transceiver sendet, und weiterhin die Wandlaufzeit des ihm zugewandten Wandbereichs ermittelt. Somit kann die Messung der Gesamtlaufzeit in einem Messschritt mit der Messung einer der Wandlaufzeiten erfolgen.

Somit kann jeder der beiden THz-Transceiver jeweils den ihm zugewandten, d.h. vorderen und/oder vor ihm liegenden Wandbereich vermessen, d.h. insbesondere eine Schichtdicke des vor ihm liegenden Wandbereich vermessen. Hierdurch wird auch eine genauere Messung ermöglicht, anders als bei einer Messung des hinteren Wandbereichs, da bei der Messung des hinteren Wandbereichs die Strahlung erst durch den vor dem Transceiver liegenden Wandbereich gelangen muss, und auch der in dem hinteren Wandbereich reflektierte Strahl wieder durch den vorderen Wandbereich zurückgelangen muss. Bei diesen Vermessungen einer Schichtdicke des hinteren Wandbereichs erfolgt somit immer eine hohe Absorption im Messobjekt, die die relativ schwache Reflektions-Strahlung von Grenzflächen nochmals schwächt. Erfindungsgemäß hingegen kann auch bei der Vermessung der Wandbereiche ein starkes Signal gewonnen werden.

Somit wirkt diese Vermessung jeweils des vorderen Wandbereichs durch jeden Transceiver insbesondere mit dem Prinzip der direkten Messung der Transmission in der Leermessung und Messung mit Messobjekt zusammen, da in den z.B. vier Messungen jeweils starke Messsignale ermittelt werden können, die gemeinsam ausgewertet werden können. Somit kann die Messvorrichtung und Auswertung an diese starken Signale angepasst werden. Die Messung der Gesamtlaufzeit und die Messung der ersten oder der zweiten Wandlaufzeit durch die Transceiver können hierbei jeweils gemeinsam erfolgen, d.h. insbesondere in einem Messschritt.

Bei dem erfindungsgemäßen Verfahren erfolgen die Messung der ersten Wand-Laufzeit durch den ersten THz-Transceiver und die Messung der zweiten Wand-Laufzeit durch den zweiten THz-Transceiver (4) jeweils durch Vermessung des vor dem THz-Transceiver liegenden vorderen Wandbereichs.

Bei dem erfindungsgemäßen Verfahren kann die Messung der Gesamtlaufzeit und die Messung der ersten oder der zweiten Wandlaufzeit gemeinsam und/oder in einem gemeinsamen Messschritt erfolgen.

Bei dem erfindungsgemäßen Verfahren kann das Messobjekt in dem Messraum vollumfänglich vermessen werden durch:

mindestens ein Paar von THz-Transceivern, die um den Messraum reversieren oder um den Messraum rotieren, oder eine statische Anordnung von mehreren Paaren von ersten und zweiten THz-Transceivern, die um den Messraum herum vorgesehen sind.

Ein weiterer Vorteil liegt in der Symmetrie der Ausbildung, so dass die Leermessung wechselseitig von beiden THz-Transceivern durchgeführt werden kann und somit ein Vergleich zur Korrektur von Ungleichheiten bzw. zur Kompensation durchgeführt werden kann, wobei z. B. ein gemittelter Wert herangezogen werden kann. Somit können sowohl die Leermessung als auch die Messung der Gesamt-Laufzeit von beiden Seiten durchgeführt werden, um z. B. die Messungen zu plausibilisieren und/oder zu mitteln. Eine wechselseitige Transmissionsmessung der Gesamt-Laufzeit kann mit den beiden Einzelmessungen der Wandlaufzeiten kombiniert werden.

Weiterhin ist gegenüber z. B. Spiegel-Ausbildungen eine genauere Ausrichtung der THz-Transceiver möglich.

Erfindungsgemäß können weiterhin auch Fehler in dem Messobjekt sicher erkannt werden, wobei diese Fehler sich insbesondere in der Signalstärke und/oder Signalform bemerkbar machen. Bei Entdecken eines Fehlers können nachfolgend z. B. die THz-Transceiver an die ermittelte Fehlerstelle geführt werden, für weitere oder genauere Vermessungen.

Die Schritte des erfindungsgemäßen Verfahrens können auch in geänderter Reihenfolge durchgeführt und beliebig oft wiederholt werden.

Gemäß vorteilhafter Ausbildungen erfolgt eine vollumfängliche Vermessung des Messobjektes durch eine statische Ausbildung mit mehreren Paaren von Transceivern, und/oder durch eine nicht-statische Vermessung, bei der ein oder mehrere Transceiver-Paare um den Messraum rotieren oder aber reversieren, d.h. hin- und herfahren.

Ein weiterer Vorteil der Erfindung liegt in der Ausbildung unterschiedlicher möglicher Strahlformen. Grundsätzlich kann der THz-Strahl fokussiert werden, z. B. auf eine Symmetrieachse des Strangs Gemäß einer hierzu alternativen und vorteilhaften Ausbildung wird ein paralleler THz-Strahl ausgegeben, wodurch einige Vorteile erreicht werden. So liegen bei einem auf die Symmetrieachse fokussierten THz-Strahl bereits Laufzeitunterschiede der einzelnen Teilstrahlen aufgrund unterschiedlicher Weglängen vor, die bei Ausgabe paralleler THz-Strahlung weitgehend vermieden werden können. Weiterhin ist erfindungsgemäß vorzugsweise die Messung der Wandlaufzeiten durch die parallele Strahlung verbessert, da eine Fokussierung auf die Symmetrieachse zu einer ungenauen Messung des vor der Symmetrieachse liegenden Wandbereichs führt. Weiterhin wird durch die parallele THz-Strahlung auch die Erfassung bei nicht genau positioniertem Rohr verbessert. Gegenüber einer Ausbildung mit einem Spiegel wird auch der Einfluss von Mehrfach-Reflexionen verringert.

Der THz-Strahl kann insbesondere zweidimensional parallel ausgegeben werden, d.h. nicht nur in einer Richtung parallel und in der anderen linear fokussiert, sondern vorzugsweise in einem zweidimensionalen Querschnitt parallel. Hierdurch wird eine breite Erfassung des Bereichs des Messobjektes ermöglicht, mit einer vorteilhaften Auswertung.

Hierbei kann der erste und/oder zweite THz-Transceiver insbesondere eine Strahlungsoptik, insbesondere mit einer Sammellinse aufweisen, zum Parallelrichten der ausgesandten THz-Strahlung und/oder zum Empfangen paralleler THz-Strahlung.

Die erfindungsgemäße Vermessung kann in einem Herstellungsverfahren, z. B. Extrusionsverfahren, direkt zur Regelung der Herstellungsparameter eingesetzt werden.

Die THz-Strahlung der beiden Transceiver kann insbesondere in einem Frequenzbereich von 10 GHz bis 50 THz, z. B. 10 Ghz oder 20 GHz bis 10 THz oder 4 THz, z. B. 50 GHz bis 4 THz oder 50 GHz bis 1 THz liegen, insbesondere mit Frequenzmodulation oder direkter Laufzeitmessung oder gepulster Strahlung. Somit kann die THz-Strahlung auch ganz oder teilweise im Bereich von Mikrowellenstrahlung oder Radarstrahlung liegen.

Die von den beiden THz-Transceivern ausgegebene Strahlung kann bei der Messvorrichtung und/oder dem Verfahren gemäß einer Ausführungsform gleiche Frequenzen aufweisen. Hierbei können gleiche THz-Transceiver und/oder gleiche Chips eingesetzt werden können, was somit auch kostengünstig ist. Somit ist z. B. auch eine Mittelung der Messwerte möglich.

Alternativ zu der Ausbildung der THz-Transceiver oder der Messungen mit gleichen Frequenzen können aber auch unterschiedliche und/oder sich überlappende Frequenzbereiche oder Frequenzbänder, die z.B. unterschiedliche Teilbereiche einer Bandbreite darstellen. Somit können nachfolgend Messsignale des ersten THz-Transceivers und des zweiten THz-Transceivers als Auswertesignal zusammengeführt werden, eine Grundfrequenz des Auswertesignals bestimmt werden, um nachfolgend eine Berechnung einer oder mehrerer Schichtdicken durchzuführen.

Durch die unterschiedlichen und/oder sich überlappenden Frequenzbereiche können andere Vorteile erreicht werden, z. B. als Mehrfrequenz-Messverfahren, um eine höhere Auflösung von Abständen entlang der Strahlachse zu erreichen, z. B. eine höhere Auflösung von Schichtdicken. So können für die Messungen verschiedene und/oder überlappende Frequenzen oder Frequenzbänder gewählt werden, die unterschiedliche Teilbereiche einer Bandbreite darstellen, so dass die Messsignale nachfolgend als Auswertesignal zusammengeführt werden. Hieraus kann dann vorzugsweise eine Grundfrequenz des Auswertesignals bestimmt werden, um nachfolgend eine Berechnung einer oder mehrerer Schichtdicken durchzuführen. Ein derartiges Verfahren ist z. B. in der WO2018202696A1 beschrieben; es ermöglicht eine sehr hohe Auflösung von Schichtdicken. Hier kann erfindungsgemäß der Vorteil erreicht werden, dass zum einen eine genauere Messung erreicht wird und weiterhin die beiden Messungen voneinander getrennt werden können. Hierbei können vorzugsweise THz-Transceiver mit veränderbarer Frequenz eingesetzt werden, insbesondere vollelektronische THz-Transceiver, bei denen Frequenzänderungen, z. B. Frequenzmodulationen, technisch realisierbar sind. Somit können auch gleiche erste und zweite THz-Transceiver eingesetzt werden, die nachfolgend in der Frequenz verändert werden.

Die Synchronisier-Einrichtung kann gemäß alternativer Ausführungsformen ausgebildet sein als

a) ein Referenz-Oszillator zur direkten Ausgabe des Synchronisations-Signals,
b) als synchronisierter Trigger, und/oder
c) ein Netzwerk, z. B. Bus-System, an dem die beiden Transceiver angeschlossen sind.

Die Ermittlung der Schichtdicken und/oder der materialspezifischen Eigenschaften erfolgt durch eine Steuer- und Ermittlungseinrichtung, die die Messsignale der THz-Transceiver aufnimmt und vorzugsweise die THz-Transceiver ansteuert, um die Schritte einzuleiten. Die Steuer- und Ermittlungseinrichtung kann auch getrennt durch eine Steuereinrichtung zur Ausgabe der Steuersignale und eine hiervon getrennte Ermittlungseinrichtung ausgebildet werden.

Die Erfindung wird im Folgenden anhand der beiliegenden Zeichnungen an einer Ausführungsform näher erläutert. Es zeigen:

Fig. 1    eine Kalibriermessung einer Messvorrichtung gemäß einer Ausführungsform der Erfindung mit einem Frequenz-Zeit-Diagramm und einem Signal-Laufzeit-Diagramm;
Fig. 2    die Messvorrichtung bei der nachfolgenden Messung der Laufzeit in Transmission durch ein Messobjekt, zur Ermittlung der Gesamt-Laufzeit;

Fig. 3    die Messvorrichtung aus Figur 1, 2 bei Messung der Wandlaufzeit eines ersten Wandbereichs;
Fig. 4    die Messvorrichtung aus Figur 1 bis 3 bei Messung der Wandlaufzeit eines zweiten Wandbereichs;
Fig. 5    eine Messung bei Fehlern im Messobjekt;
Fig. 6    eine Messvorrichtung einer Ausführungsform mit mehreren Transceiver-Paaren;
Fig. 7    ein Flussdiagramm eines erfindungsgemäßen Verfahrens.

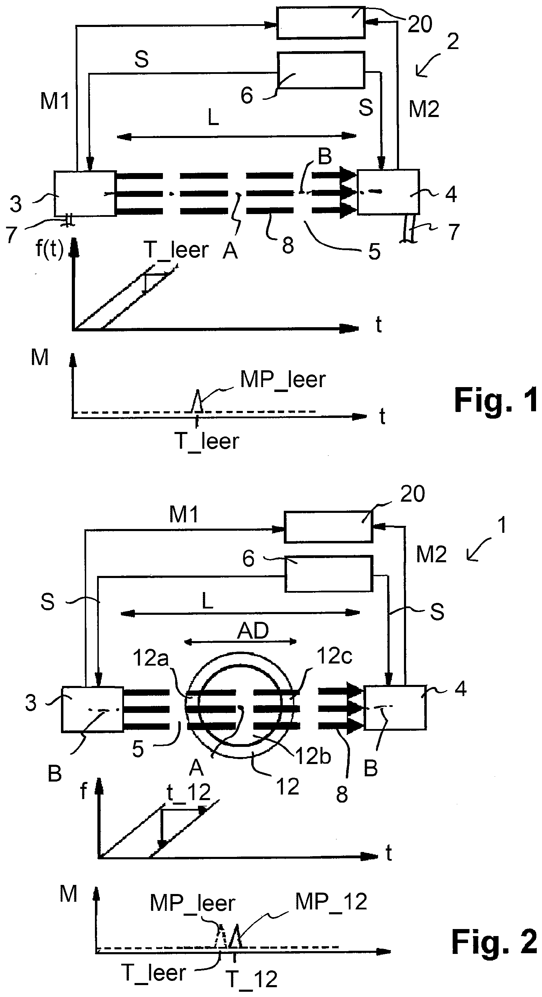

Die Figuren 1 bis 4 zeigen eine THz-Messvorrichtung 2 in mehreren, insbesondere aufeinanderfolgenden Messschritten. Die THz-Messvorrichtung 2 weist einen ersten THz-Transceiver 3 und einen zweiten THz-Transceiver 4 auf, zwischen denen ein Messraum 5 ausgebildet ist. Die beiden THz-Transceiver 3, 4 sind auf einer gemeinsamen optischen Mess-Achse B angeordnet, d. h. ihre optischen Mess-Achsen fallen zusammen. Die beiden THz-Transceiver 3, 4 sind vorteilhafterweise gleich und/oder weisen einen gleichen oder gleichartigen Transceiver-Chip auf, d. h. mit gleicher Frequenz.

Die THz-Strahlung 8 wird vorteilhafterweise parallel ausgegeben, d. h. nicht auf einen Brennpunkt fokussiert. Die beiden THz-Transceiver 3, 4 sind in einem Transceiver-Abstand L angeordnet, der somit die Breite des Messraums 5 festlegt.

Weiterhin ist eine Synchronisier-Einrichtung 6 vorgesehen, die wie nachfolgend beschrieben die Messungen der beiden THz-Transceiver 3, 4 synchronisiert. Die beiden THz-Transceiver 3, 4 geben ihre Messsignale M1, M2 zu einer Ermittlungseinrichtung 20 aus, wobei die Synchronisier-Einrichtung 6 und die Ermittlungseinrichtung 20 auch integriert werden können.

Figur 1 zeigt einen Kalibrierschritt zur Kalibrierung der THz-Messvorrichtung 2. Hierzu sendet der erste THz-Transceiver 3 THz-Strahlung 8 bzw. erste THz-Strahlung 8 entlang einer optischen Mess-Achse B durch den Messraum 5 zu dem zweiten THz-Transceiver 4.

Gemäß der hier gezeigten Ausführungsform wird die THz-Strahlung 8 als FMCW-Strahlung (Frequency Modulated Continuous Wave) ausgegeben, d. h. als frequenzmodulierte THz-Strahlung, bei der somit die Frequenz f bzw. Kern-Frequenz der vom ersten THz-Transceiver 3 ausgegebenen THz-Strahlung 8 zeitlich moduliert wird, insbesondere als Sägezahn-Verlauf bzw. Rampenverlauf. Somit kann in dem Frequenz-Zeit-Diagramm eine ermittelte Frequenzverschiebung einer zeitlichen Verschiebung, d. h. zeitlichen Verzögerung aufgrund der Laufzeit, zugeordnet werden. Statt einer Messung mittels derartiger Frequenz-Modulation kann auch eine direkte Laufzeitmessung vorgesehen sein; weiterhin kann auch gepulste Strahlung eingesetzt werden, die z. B. eine größere Bandbreite der THz-Strahlung 8 ermöglicht.

Gemäß Figur 1 durchquert somit die THz-Strahlung 8 den Transceiver-Abstand L und wird am anderen Ende des Messraums 5 mit einer Kalibrier-Laufzeit T_Leer detektiert. Bei der gezeigten Frequenzmodulation gemäß dem Frequenz-Zeit-Diagramm f(t) wird somit die entsprechende Frequenzverschiebung gemessen und als Kalibrier-Laufzeit T_Leer umgerechnet. Gemäß dem unteren Signal-Laufzeit-Diagramm der Figur 1 detektiert der zweite THz-Transceiver 4 somit einen Mess-Peak MP_Leer zu dem Zeitpunkt der T_Leer.

Die Kalibrier-Laufzeit T_Leer ergibt sich mathematisch aus dem Transceiver-Abstand L und der Lichtgeschwindigkeit (Strahlungsgeschwindigkeit) v_Luft der THz-Strahlung 8 in Luft, wobei diese Lichtgeschwindigkeit v_Luft in guter Näherung der Lichtgeschwindigkeit c im Vakuum gleichgesetzt werden kann.

$$\text{Somit ergibt sich T\_Leer} = L/ (v\_Luft) = L/c.$$

Somit ist der Messraum 5 kalibriert. Nachfolgend wird gemäß Figur 2 eine Transmissions-Messung eines als Messobjektes eingeführten Rohrs 12 durchgeführt. Hierbei wird die THz-Messvorrichtung 2 nicht verändert, insbesondere werden die THz-Transceiver 3, 4 nicht zueinander verstellt. Das Rohr 12 ist insbesondere aus einem für die THz-Strahlung 8 durchlässigen Material, insbesondere Kunststoff, aber auch Gummi, Papier, Keramik oder Steingut, ausgebildet. Kunststoff weist im Allgemeinen einen Brechungsindex n12 auf, der von der genauen Zusammensetzung abhängt und z. B. in einem Bereich von 1,5 bis 2 liegen kann. Hierbei ergibt sich n12 = c/v12, mit v12 = Lichtgeschwindigkeit der THz-Strahlung im Material des Rohres 12 und n12 als Brechungsindex des Materials. Somit können deutliche Signalverzögerungen und geeignete Mess-Peaks erreicht werden. Vorteilhafterweise wird das Rohr 12 fortlaufend entlang einer Symmetrieachse A, die insbesondere senkrecht durch die gezeigte Messebene verläuft, gefördert. Insbesondere kann die Symmetrieachse A sich orthogonal mit der optischen Mess-Achse B kreuzen.

Bei der in Figur 2 gezeigten Messung der Gesamt-Laufzeit (Transmissions-Laufzeit) T_12 mit Rohr gibt somit wiederum der erste THz-Transceiver 3 den THz-Sendestrahl 8 aus, der entlang der optischen Mess-Achse B verläuft und zunächst auf den vorderen Wandbereich 12a des Rohres 12 trifft, diesen durchquert, durch den Innenraum 12b des Rohres 12 gelangt und nachfolgend durch den hinteren, d. h. zweiten Wandbereich 12c des Rohres 12 tritt, dann weiter den Messraum 5 durchquert und von dem zweiten THz-Transceiver 4 detektiert wird. Somit wird der THz-Sendestrahl 8 zunächst durch den vorderen Wandbereich 12a mit der ersten Wanddicke WD1 und nachfolgend durch den zweiten Wandbereich WD2 zeitlich verzögert.

Bei der FMCW-Strahlung ergibt sich somit gemäß Figur 2, mittleres Diagramm, eine entsprechende Frequenzverschiebung, aus der die Laufzeit T ermittelt werden kann. Entsprechend wird das Messsignal bzw. der Mess-Peak MP12 in der Gesamt-Laufzeit T_12 detektiert und ist somit zeitlich um eine Gesamt-Verzögerung $\Delta T\_12 = T\_12 - T\_Leer$ verzögert.

Somit ergibt sich die Gesamt-Laufzeit T_12 durch die Summe der Laufzeiten durch die freien, mit Luft gefüllten Bereiche, d.h. den Innenraum 12c und die seitlichen Bereiche 5_1 und 5-2 des Messraums 5 links und rechts des Rohres, wobei diese Laufzeiten in Luft in Summe als

(L-WD1-WD2)/v_Luft angesetzt werden können,

und die Wand-Laufzeiten durch die Wandbereiche 12a, 12c,
wobei diese Wand-Laufzeiten in Summe als (WD1+ WD2)/v12 angesetzt werden können.

Es ergibt sich somit die Gesamt-Laufzeit T_12 als

$$T\_12 = ((L\text{-}WD1\text{-}WD2)/v\_Luft) + (WD1+ WD2)/v12$$

$$= ((L\text{-}WD1\text{-}WD2)/c) + (WD1+ WD2)/(c/n12)$$

Gleichungssystem GL1

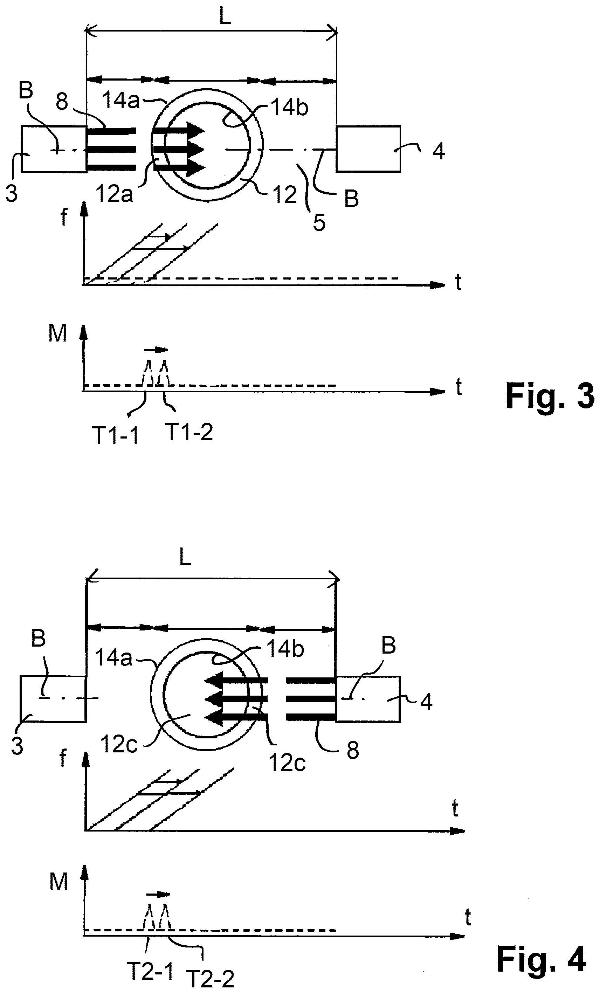

Nachfolgend werden gemäß Fig. 3 und 4 die beiden Wandbereiche 12a und 12c vermessen, um ihre Wandlaufzeiten zu ermitteln. Diese Messungen erfolgen vorzugsweise von beiden Seiten her, so dass der erste Transceiver 3 eine Einzelmessung des von ihm aus vorderen Wandbereichs 12a, und entsprechend der zweite THz-Transceiver 4 eine Einzelmessung des von ihm aus gesehenen vorderen Wandbereichs, d. h. des zweiten Wandbereichs 12c, vornimmt.

Insbesondere kann die Messung gemäß Figur 3 grundsätzlich z. B. auch mit der Messung der Gesamt-Laufzeit T_12 aus Figur 2 kombiniert werden, indem somit der erste Transceiver 3 bei dieser Messung zum einen die THz-Strahlung 8 aussendet, damit der zweite THz-Transceiver 4 diese entsprechend Figur 2 detektiert, und weiterhin als erster THz-Transceiver 3 auch die reflektierte Strahlung misst. Der Übersichtlichkeit halber sind die Messungen in den Darstellungen aber getrennt.

Gemäß Figur 3 sendet somit der erste THz-Transceiver 3 die THz-Strahlung 8 aus, die an den Grenzflächen 14a, 14b des vorderen Wandbereichs 12a jeweils teilweise reflektiert wird. Bei dem vorderen Wandbereich 12a stellt die Außenfläche 14a somit die erste Grenzfläche, und die Innenfläche 14b die zweite Grenzfläche dar, an denen die ausgesandte THz-Strahlung 8 jeweils teilweise reflektiert wird. Gemäß dem Frequenz-Zeit-Diagramm und dem Signal-Laufzeit-Diagramm der Figur 3 wird somit gemessen:

Ein Außen-Reflexionspeak MP3-1 bei einer ersten Reflexions-Zeit T1_1 von dem Transceiver 3 zu der Außenfläche 14a des ersten Wandbereichs 12a und zurück,
ein Innen-Reflexionspeak MP3-2 bei einer zweiten Reflexions-Zeit T1_2 von dem Transceiver 3 zu der Innenfläche 14b des ersten Wandbereichs 12a und zurück,

und durch Subtraktion dieser Messwerte, d.h. Reflexions-Zeiten, mit nachfolgenden Teilen durch den Faktor 2 eine erste Wand-Laufzeit T_WD1. Die ermittelte Differenz der Messwerte stellt zunächst den doppelten Wert einer einfachen Laufzeit Wand-Laufzeit T_WD1 dar, so dass die (einfache) Wandlaufzeit durch Kürzen um den Faktor 2 zu ermitteln ist.

Es ergibt sich somit für die erste Wanddicke WD1 und die erste Wand-Laufzeit T_WD1 durch die erste Wanddicke WD1 das folgende Gleichungssystem:

$$WD1 = c/(2n) \ * \ (T1\_2 \ - \ T1\_1 \ )$$

$$= c/(2n) \ T\_WD1$$

Gleichungssystem GL2

Gemäß Figur 4 erfolgt die entsprechende Vermessung des zweiten Wandbereichs 12c, d. h. in den Figuren des rechten Wandbereichs des Rohres 12, durch den zweiten THz-Transceiver 4.

Somit ergibt sich entsprechend die zweite Wanddicke WD2 und die zweite (einfache) Wand-Laufzeit T_WD2 durch die zweite Wanddicke WD2 als:

$$WD2 = c/(2n) \ * \ (T2\_2 \ - \ T2\_1 \ )$$
$$= c/(2n) \ T\_WD2$$

<div align="right">

Gleichungssystem GL3

</div>

Die Messungen der Wandlaufzeiten nach Figur 3 und 4 entsprechen sich somit bzw. sind symmetrisch, auch wenn der Abstand der Außenfläche 14a von den Transceivern 3, 4 unterschiedlich sein kann; bei dieser Differenzbildung geht dies nicht weiter ein.

Die in Figur 1 gezeigte Kalibriermessung bzw. Leermessung kann insbesondere auch von beiden Seiten erfolgen, d. h. sowohl vom ersten Transceiver 3 durch den leeren Messraum zu dem zweiten Transceiver 4, und umgekehrt entsprechend vom zweiten Transceiver 4 durch den Messraum 5 entlang der gemeinsamen optischen Mess-Achse B zu dem ersten Transceiver 3, z. B. mit nachfolgender Mittelung, und/oder zur Korrektur bzw. Kompensation der Unterschiede der Leermessungen von den beiden Seiten, um somit technische Unterschiede der Transceiver 1 und 2 zu ermitteln, mit denen insbesondere eine Korrektur bzw. Kompensation der in Figur 4 gezeigten zweiten Wandlaufzeit-Messung durchgeführt werden kann.

In der Kalibriermessung der Figur 1 und der Messung der Gesamt-Laufzeit der Figur 2 erfolgt eine Synchronisierung der beiden THz-Transceiver 3, 4 durch die Synchronisier-Einrichtung 6 mittels der Synchronisier-Signale S; in den Einzelmessungen der Figur 3 und 4 ist dies nicht erforderlich, da die THz-Transceiver 3, 4 hier jeweils als Transceiver, d. h. Sende- und Empfangseinrichtungen, wirken und somit die Wandlaufzeiten direkt ermitteln.

Aus den Messungen nach Figur 1 bis 4 ergibt sich somit zum einen die Gesamt-Laufzeit als auch Wandlaufzeiten der beiden Wandbereiche 12a, 12b, so dass ein Gleichungssystem zur Ermittlung der drei unbekannten Größen, d. h. der ersten Wanddicke WD1, der zweiten Wanddicke WD2, und auch des Brechungsindex n12 (bzw. der Lichtgeschwindigkeit v12 im Material des Rohres 12) durchgeführt werden kann aufgrund folgenden Gleichungssystems GL4:

$$T\_12 \qquad = ((L\text{-}WD1\text{-}WD2)/ \ v\_Luft) + (WD1\text{+}WD2)/v12$$
$$= ((L\text{-}WD1\text{-}WD2)/c) + (WD1\text{+}WD2)/(c/n)$$
$$= ((L\text{-}(WD1\text{+}WD2))/c) + (WD1\text{+}WD2)/(c/n)$$

$$\blacktriangleright n \quad = \ (T\_12 \ * \ c - L + (WD1\text{+}WD2)) \ / \ (WD1\text{+}WD2)$$

$$\blacktriangleright WD1 \qquad = c/2n \ * \ (T\_WD1)$$

$$\blacktriangleright WD2 \qquad = c/2n \ * \ (T\_WD2)$$

$$T\_Leer = \ (L/V\_Luft) = L/c$$
$$L \ = T\_Leer \ * \ c$$

<div align="right">

Gleichungssystem GL4

</div>

Bekannt sind hierbei

- T_12 = Messwert aus Messung mit Rohr 12
- T_Leer = Messwert aus Leermessung
- L = Abstand der Transceiver
- C = Lichtgeschwindigkeit

Unbekannt sind hierbei

- WD1+WD2 = Wanddicke 1 + Wanddicke 2 = y
- n = Brechungsindex des Rohrs 12

**EP 4 160 139 B1**

GL4 kann somit bei dem erfindungsgemäßen Verfahren und der erfindungsgemäßen Messvorrichtung eingesetzt werden.

Die Kalibriermessung der Figur 1 kann vorab durchgeführt werden, bevor das Rohr 12 gefördert wird. Nachfolgend kann das Rohr 12 fortlaufend entlang der Symmetrieachse A gefördert und gemäß Figur 2, 3 und 4 durch die beiden Transceiver 3, 4 vermessen werden. Wie bereits ausgeführt, können hierbei z. B. Messungen aus Figur 2 und 3 kombiniert werden. Nach Beendigung der Vermessung des Rohres 12 kann wiederum eine Leermessung nach Fig. 1 durchgeführt werden, um Abweichungen gegenüber der ersten Leermessung zu überprüfen.

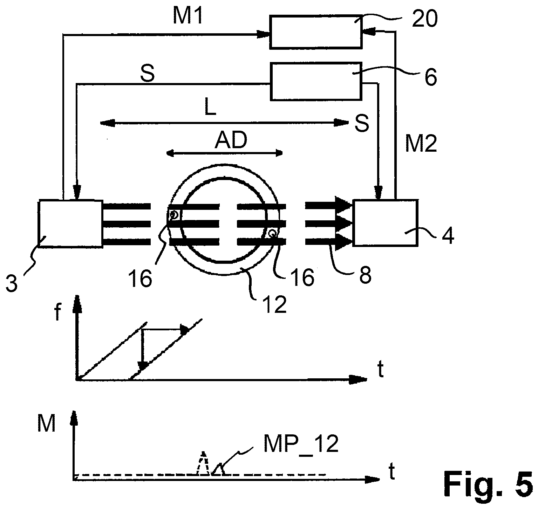

Figur 5 zeigt die Vermessung eines Rohres 12 mit Fehlern 16 im oder am Rohr 12. Die Fehler 16 können z. B. Lunker, d. h. Lufteinschlüsse in den Wandbereichen WD1, WD2 sein, weiterhin auch Fremdkörper. Weiterhin können an der Außenfläche 14a oder Innenfläche 14b Unregelmäßigkeiten bzw. Strukturen auftreten, z. B. durch Abbrand von Material.

Gemäß dem Signal-Laufzeit-Diagramm der Figur 5 ergibt sich - im Vergleich zu der Messung der Gesamtlaufzeit gemäß Figur 2 - insbesondere eine Veränderung des Messsignals bzw. Mess-Peaks MP_12, insbesondere in der Höhe der Intensität und/oder der Form. Somit kann eine qualitative oder eine quantitative Bewertung des Messsignals MP_12 zur Erfassung von Fehlern 16 verwendet werden. Bei der Erfassung derartiger Fehler 16 kann nachfolgend z. B. eine detailliertere Ermittlung durch Verstellen der THz-Transceiver 3, 4 auf die entsprechenden Stellen bzw. um die Stellen herum erfolgen.

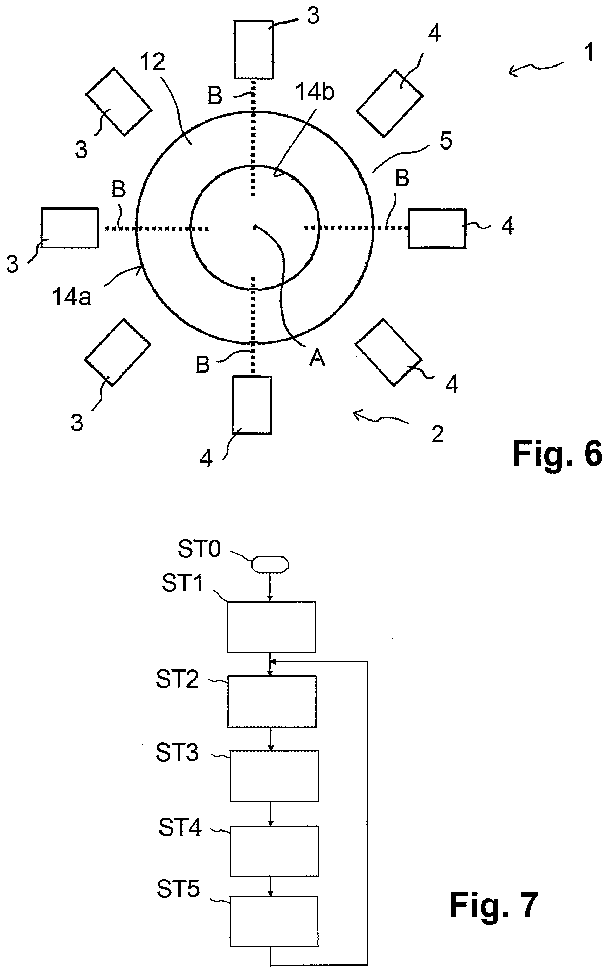

Die Messvorrichtung 2 kann statisch oder nicht-statisch ausgebildet sein. Bei einer statischen Anordnung sind vorteilhafterweise gemäß Fig. 7 mehrere Transceiver-Paare 3, 4 einander gegenüberliegend um den Messraum 5 angeordnet. Die einzelnen Paare von Transceivern 3, 4 können auch unterschiedliche THz-Strahlung, z. B. unterschiedlicher Polarisation aussenden.

Bei einer nicht-statischen Anordnung können ein oder mehrere Paare von THz-Transceivern 3, 4 um den Messraum 5 umlaufen, d. h. rotieren; weiterhin können ein oder mehrere Paare von THz-Transceivern 3, 4 auch reversieren, d. h. um die Symmetrieachse A hin- und herschwenken Vorteilhafterweise sind die THz-Transceiver 3, 4 bzw. auch die mehreren Paare von THz-Transceivern auf einem gemeinsamen Gestell 7, zur festen mechanischen Koppelung, angeordnet.

Figur 7 zeigt ein Flussdiagramm des Verfahrens gemäß der beschriebenen Ausführungsform.

Nach dem Start in Schritt ST0 der Bereitstellung der Messanordnung 1 wird nachfolgend die in Figur 1 gezeigte Kalibriermessung, d. h. Leermessung in Transmission, gemäß Schritt ST1 durchgeführt und die Leer-Laufzeit T_Leer ermittelt. Wie oben beschrieben, kann die Leermessung bzw. Kalibriermessung in Transmission auch von beiden Seiten her durchgeführt werde, so dass beide Transceiver 3, 4 einmal THz-Strahlung 8 aussenden und einmal empfangen, um z. B. eine Mittelung durchzuführen; weiterhin kann durch einen solchen Vergleich ggf. auch die Synchronisiereinrichtung 6 korrigiert werden.

Nachfolgend wird in Schritt ST2 die in Figur 2 gezeigte Messung der Gesamtlaufzeit T_12 mit dem Rohr 12 durchgeführt. Gemäß Schritt ST3 wird die Messung der ersten Wand-Laufzeit T_WD1, und in Schritt ST4 die Messung der zweiten Wand-Laufzeit T_WD2 durchgeführt. In dem nachfolgenden Ermittlungsschritt ST5 somit gemäß dem oben beschriebenen Gleichungssystem die Werte WD1, WD2 und n12 fortlaufend aus den Messungen ermittelt werden. Weiterhin können die so ermittelten Werte auch fortlaufend überprüft und miteinander verglichen werden.

Gemäß Figur 7 kann das Verfahren somit vor den Schritt ST2 zurückgesetzt werden, d.h. fortlaufend durchgeführt werden.

Wie oben beschrieben, können die Messungen nach Figur 2 bis 4 hierbei kombiniert werden. Weiterhin kann die Reihenfolge der Messschritte ST2, ST3, ST4 variiert werden.

Bezugszeichenliste

1    Messanordnung
2    THz-Messvorrichtung
3    erster THz-Transceiver
4    zweiter THz-Transceiver
5    Messraum
6    Synchronisier-Einrichtung
8    THz-Strahlung
10   Referenz-Oszillator
12   Messobjekt, insbesondere Strang, z. B. Rohr
12a   erster Wandbereich
12b   Innenraum des Messobjekts 12

| 12c | zweiter Wandbereich |
|---|---|
| 16 | Fehler |
| 17 | Gestell der THz-Messvorrichtung 2 |
| 20 | Ermittlungseinrichtung |

| A | Symmetrieachse, insbesondere Mittelachse des Messobjektes 12 |
|---|---|
| B | Mess-Achse |
| L | Transceiver-Abstand |
| M1 | erstes Messsignal des ersten THz-Transceivers 3 |
| M2 | zweites Messsignal M2 des zweiten THz-Transceivers 4 |
| MP | Mess-Peaks |
| MP- Leer | Mess-Peak der Kalibriermessung |
| n12 | Brechungsindex des Materials des Messobjektes 12 |
| S | Synchronisier-Signal |

| T_Leer | Kalibrier-Laufzeit, Leer-Laufzeit gemäß Fig. 1 |
|---|---|
| T_12 | Gesamt-Laufzeit mit Messobjekt gemäß Fig. 2 |
| ΔT_12 | Gesamt-Verzögerung als T-12 - T_Leer |

| v_Luft | Lichtgeschwindigkeit (Strahlungsgeschwindigkeit) in Luft (etwa c) |
|---|---|
| v12 | Lichtgeschwindigkeit (Strahlungsgeschwindigkeit) im Material des Messobjektes 12 |
| WD1 | erste Wanddicke, Wanddicke links |
| WD2 | zweite Wanddicke, Wanddicke rechts |
| AD | Außendurchmesser des Messobjektes 12 |

| ID | Innendurchmesser des Messobjektes 12 |
|---|---|

| T1_1 | erste Reflexions-Zeit von dem Transceiver 3 zu der Außenfläche 14a des ersten Wandbereichs 12a und zurück |
|---|---|
| MP1_1 | Außen-Reflexionspeak zu der ersten Reflexions-Zeit T1_1 von dem Transceiver 3 zu der Außenfläche 14a des ersten Wandbereichs 12a und zurück, |
| T1_2 | zweite Reflexions-Zeit von dem Transceiver 3 zu der Innenfläche 14b des ersten Wandbereichs 12a und zurück, |
| MP1-2 | Innen-Reflexionspeak zu der zweiten Reflexions-Zeit T1_2 von dem Transceiver 3 zu der Innenfläche 14b des ersten Wandbereichs 12a und zurück, |

| T2_1 | erste Reflexions-Zeit von dem Transceiver 4 zu der Außenfläche 14a des zweiten Wandbereichs 12c und zurück |
|---|---|
| MP2_1 | Außen-Reflexionspeak zu der ersten Reflexions-Zeit T2_1 von dem Transceiver 4 zu der Außenfläche 14a des zweiten Wandbereichs 12c und zurück, |
| T2_2 | zweite Reflexions-Zeit von dem Transceiver 3 zu der Innenfläche 14b des zweiten Wandbereichs 12c und zurück, |
| MP2-2 | Innen-Reflexionspeak zu der zweiten Reflexions-Zeit T2_2 von dem Transceiver 4 zu der Innenfläche 14b des zweiten Wandbereichs 12c und zurück |

| T_WD1 | erste Wand-Laufzeit. |
|---|---|
| T_WD2 | zweite Wand-Laufzeit |

| ST1 | Schritt der Leer-Messung, Kalibrier-Messung |
|---|---|
| ST2 | Schritt der Messung der Gesamtlaufzeit |
| ST3 | Schritt der Messung der ersten Wandlaufzeit |
| ST4 | Schritt der Messung der zweiten Wandlaufzeit |
| ST5 | Schritt der Ermittlung und/oder Berechnung |

**Patentansprüche**

1. THz-Messvorrichtung (2) zur Vermessung eines Messobjektes (12), wobei die THz-Messvorrichtung (12) aufweist:

einen Messraum (5) zur Aufnahme eines Messobjektes (12),

einen ersten THz-Transceiver (3), der ausgebildet ist zum Aussenden von THz-Strahlung (8) durch den Messraum (5) und Aufnehmen von THz-Strahlung (8),

einen zweiten THz-Transceiver (4), der ausgebildet ist zum Aussenden von THz-Strahlung (8) durch den Messraum (5) und zum Aufnehmen von THz-Strahlung, die von dem ersten THz-Transceiver (3) ausgesendet ist, wobei die beiden THz-Transceiver (3, 4) einander gegenüberliegen und der Messraum (5) zwischen ihnen ausgebildet ist,

eine Synchronisier-Einrichtung (6), die ausgebildet ist, Aussende-Zeitpunkte und/oder Mess-Zeitpunkte der beiden Transceiver (3, 4) zu synchronisieren, und zumindest einen Aussende-Zeitpunkt eines der beiden Transceiver (3, 4) mit dem Mess-Zeitpunkt des anderen Transceivers (3, 4) zumindest während einer Leermessung und während einer Messung der Gesamtlaufzeit zu synchronisieren,

eine Ermittlungseinrichtung (20), die ausgebildet ist, ein erstes Messsignal (M1) des ersten THz-Transceivers (3) und ein zweites Messsignal (M2) des zweiten THz-Transceivers (4) aufzunehmen und mindestens eine Schichtdicke (WD1, WD2) und/oder mindestens eine Schichteigenschaft, die ein Brechungsindex des Materials des Messobjektes (n12) oder eine Lichtgeschwindigkeit der THz-Strahlung im Material des Messobjektes ist (v12), zu ermitteln,

wobei die Ermittlungseinrichtung (20) ausgebildet ist, die Schichtdicke (WD1, WD2) und die mindestens eine Schichteigenschaft (n12, v12) zu ermitteln aus folgenden Messungen:

- einer Leermessung, bei der der erste THz-Transceiver (3) die THz-Strahlung (8) durch den leeren Messraum (5) zu dem zweiten THz-Transceiver (4) ausgibt und der zweite THz-Transceiver (4) eine Leer-Laufzeit (T_Leer) misst,
- einer Messung der Gesamtlaufzeit, bei der der erste THz-Transceiver (3) die THz-Strahlung (8) durch den Messraum (5) und durch das Messobjekt (12) zu dem zweiten THz-Transceiver (4) ausgibt und der zweite THz-Transceiver eine Laufzeit mit Messobjekt (T_12) misst, und
- mindestens zwei Wandbereichs-Messungen (ST3, ST4), bei der der erste und

zweite Transceiver (3, 4) THz-Strahlung (8) ausgibt und die an Grenzflächen (14a, 14b) mindestens eines Wandbereichs (12a, 12b) reflektierte THz-Strahlung detektiert,

wobei die beiden Transceiver (3, 4) auf einer sich durch den Mess-Raum (5) erstreckenden gemeinsamen optischen Mess-Achse (B) gegenüberliegend angeordnet sind, und

wobei die beiden Transceiver (3, 4) weiterhin angeordnet und ausgebildet sind, die THz-Strahlung (8) entlang der gemeinsamen optischen Mess-Achse (B) in oder durch den Messraum (5) zu senden,

wobei die Ermittlungseinrichtung (20) ausgebildet ist,

- eine erste Wandbereichs-Messung (ST3, ST4) durch den ersten Transceiver (3) für die Messung einer ersten Wandlaufzeit (T_WD1) und
- eine zweite Wandbereichs-Messung (ST3, ST4) durch den zweiten Transceiver (4) für die Messung einer zweiten Wandlaufzeit (T_WD2) anzusteuern,

und wobei die Ermittlungseinrichtung (20) ausgebildet ist, die erste Wanddicke (WD1) des ersten Wandbereichs (12a) und die zweite Wanddicke (WD2) des zweiten Wandbereichs (12c) zu ermitteln, wobei jeder der beiden Transceiver (3, 4) jeweils die Wandbereichs-Messung des ihm zugewandten, vor ihm liegenden Wandbereichs durchführt.

2. THz-Messvorrichtung (2) nach Anspruch 1,
**dadurch gekennzeichnet, dass**
die Synchronisier-Einrichtung (6) ausgebildet ist als eine der folgenden Einrichtungen:

a) ein Referenz-Oszillator zur Ausgabe eines Referenz-Signals (S),
b) ein synchronisierter Trigger (6) zur Ausgabe eines Synchronisations-Signals (S), und/oder
c) ein Netzwerk, z. B. Bus-System, an dem die beiden Transceiver (3, 4) angeschlossen sind.

3. THz-Messvorrichtung (2) nach einem der vorherigen Ansprüche, **dadurch gekennzeichnet, dass** die Ermittlungseinrichtung (20) ausgebildet ist,
die erste Wandbereichs-Messung (ST3, ST4) und die zweite Wandbereichs-Messung (ST3, ST4) sukzessive durch die beiden Transceiver (3, 4) durchzuführen.

4. THz-Messvorrichtung (2) nach Anspruch 3, **dadurch gekennzeichnet, dass** jeder der beiden Transceiver (3, 4) jeweils die Wandbereichs-Messung des ihm zugewandten, vor ihm liegenden Wandbereichs in einem Messschritt zusammen mit der Messung der Gesamtlaufzeit durchführt.

5. THz-Messvorrichtung (2) nach einem der vorherigen Ansprüche, **dadurch gekennzeichnet, dass** die Ermittlungseinrichtung (20) ausgebildet ist, sowohl mindestens eine Schichtdicke, insbesondere zwei Wanddicken (WD1, WD2) des Messobjektes (12),
als auch die mindestens eine Materialeigenschaft (n12, v12), insbesondere einen Brechungsindex (n12) und/oder eine Lichtgeschwindigkeit (v12) der THz-Strahlung (8) in dem Material des Messobjektes (12), zu ermitteln.

6. THz-Messvorrichtung (2) nach einem der vorherigen Ansprüche, **dadurch gekennzeichnet, dass**

die THz-Messvorrichtung (2) ausgebildet ist, fortlaufend die Messung (ST2) der Gesamtlaufzeit (T_12) und die Messungen (ST3, ST4) der ersten und zweiten Wandlaufzeiten (WD1, WD2) durchzuführen,
und die Ermittlungseinrichtung (20) ausgebildet ist, aus kontinuierlichen Messwerten (M1, M2) der Gesamtlaufzeit (T_ 12) und der Wandlaufzeiten (T_WD1, T_WD2) fortlaufend die mindestens eine Schichtdicke (WD1, WD2) und/oder die mindestens eine Materialeigenschaft (n12, v12) zu ermitteln,
insbesondere bei einem kontinuierlich durch den Messraum (5) durchlaufenden Messobjekt (12).

7. THz-Messvorrichtung (2) nach einem der vorherigen Ansprüche, **dadurch gekennzeichnet, dass** die THz-Transceiver (3, 4) statisch um den gemeinsamen Messraum (5) herum angeordnet sind,
insbesondere als ein oder mehrere Paare (3, 4), z.B. zwei oder drei Paare, von jeweils einem ersten THz-Transceiver (3) und einem zweiten THz-Transceiver (4).

8. THz-Messvorrichtung (2) nach einem der Ansprüche 1 bis 6, **dadurch gekennzeichnet, dass** mindestens ein Paar von THz-Transceivern (3, 4) auf einem Gestell (7) verstellbar, insbesondere um den Messraum (5) reversierend oder um den Messraum (5) umlaufend oder rotierend vorgesehen ist, zur vollumfänglichen Vermessung des Messobjektes (12) in dem Messraum (5).

9. THz-Messvorrichtung (2) nach einem der vorherigen Ansprüche, **dadurch gekennzeichnet, dass** der erste und/oder zweite THz-Transceiver (3, 4) ausgebildet ist, die THz-Strahlung (8) parallel entlang der optischen Messachse (B) auszugeben und/oder zu empfangen, insbesondere zweidimensional parallel.

10. THz-Messvorrichtung (2) nach einem der vorherigen Ansprüche, **dadurch gekennzeichnet, dass** die Emittlungseinrichtung (20) dazu ausgebildet ist, einen Außendurchmesser (AD) und/oder Innendurchmesser (ID) des Messobjektes (12) zu ermitteln.

11. THz-Messvorrichtung (2) nach einem der vorherigen Ansprüche, **dadurch gekennzeichnet, dass** die Ermittlungseinrichtung (20) dazu ausgebildet ist, eine erste Wanddicke WD1, eine zweite Wanddicke WD1 und einen Brechungsindex n des Messobjektes zu ermitteln aus

$$n \;=\; (T\_12 * c - L + (WD1 + WD2)) \,/\, (WD1 + WD2)$$

$$WD1 \;=\; c/2n * (T\_WD1)$$

$$WD2 \;=\; c/2n * (T\_WD2)$$

$$\text{mit } L = T\_Leer * c$$

wobei

WD1 = Wanddicke 1
WD2 = Wanddicke 2
n = Brechungsindex des Rohrs 12
T_12 = Messwert aus Messung mit Rohr 12

T_Leer = Messwert aus Leermessung
L = Abstand der Transceiver
C = Lichtgeschwindigkeit
T_WD1 = Wandlaufzeit durch die erste Wanddicke 1 (WD1)
T_WD2 = Wandlaufzeit durch die zweite Wanddicke 2 (WD2)
(Gleichungssystem GL4)

12. Messanordnung (1), die aufweist:

eine THz-Messvorrichtung (2) gemäß einem der vorherigen Ansprüche, und
ein durch den Messraum (5) der THz-Messvorrichtung (2) geführtes Messobjekt (12), insbesondere ein Profil (12), z. B. Rohr (12) und/oder Rechteck-Profil und/oder halboffenes Profil, z. B. gewölbte Rinne.

13. THz-Messverfahren zur Vermessung eines Messobjektes (12),

mit mindestens folgenden Schritten:

- Bereitstellung einer THz-Messvorrichtung (2) mit mindestens einem ersten THz-Transceiver (3), einem zweiten THz-Transceiver (4), der gegenüberliegend zum ersten THz-Transceiver (3) auf einer gemeinsamen optischen Achse (B) angeordnet ist, wobei ein Messraum (5) zwischen den beiden THz-Transceivern (3, 4) ausgebildet ist, (Schritt ST0),
- Leermessung, Aussenden von THz-Strahlung (8) von einem der THz-Transceiver (3) durch den leeren Messraum (5) zu dem anderen THz-Transceiver (4), Detektieren der THz-Strahlung (8) durch den anderen THz-Transceiver (4) und Ermittlung einer Leer-Laufzeit (T_Leer) (Schritt ST1),
- Einbringen eines Messobjektes (12) in den Messraum (5),
- Messung einer Gesamt-Laufzeit (T_12) durch Aussenden von THz-Strahlung (8) von einem der THz-Transceiver (3) durch den Messraum (5) und das Messobjekt (12) zu dem anderen THz-Transceiver (4) und Detektieren der THz-Strahlung (8) durch den anderen THz-Transceiver (4) und Ermittlung einer Laufzeit mit Messobjekt (T_12) (Schritt ST2),
- Aussenden von THz-Strahlung (8) von dem ersten THz-Transceiver (3) durch den Messraum (5) zu einem ersten Wandbereich (12a) des Messobjektes (12) und Detektieren der von Grenzflächen (14a, 14b) des ersten Wandbereichs (12a) reflektierten THz-Strahlung (8) durch den ersten THz-Transceiver (3) und Ermittlung einer ersten Wand-Laufzeit (T_WD1), (Schritt ST3)
- Aussenden von THz-Strahlung (8) von dem zweiten THz-Transceiver (4) durch den Messraum (5) zu einem zweiten Wandbereich (12c) des Messobjektes (12) und Detektieren der von Grenzflächen (14a, 14b) des zweiten Wandbereichs (12c) reflektierten THz-Strahlung (8) durch den zweiten THz-Transceiver (4) und Ermittlung einer zweiten Wand-Laufzeit (T_WD2), (Schritt ST4)
- Ermittlung mindestens einer Schichtdicke (WD1, WD2) und/oder der mindestens einen Materialeigenschaft (n12, c12) mit einer Ermittlungsvorrichtung, die ausbildet ist, mindestens zwei Schichtdicken und eine Schichteigenschaft aus der Leermessung (ST1), der Messung der Gesamtlaufzeit (ST2), und den beiden Messungen (ST3, ST4) der ersten und zweiten Wand-Laufzeiten (T_WD1, T_WD2) (Schritt ST5) zu ermitteln, wobei die Schichteigenschaft ein Brechungsindex des Materials des Messobjektes (n12) oder eine Lichtgeschwindigkeit der THz-Strahlung im Material des Messobjektes ist (v12),

wobei die Messungen (Schritt ST1, Schritt ST2, Schritt ST3, Schritt ST4) der beiden THz-Transceiver (3, 4) auf einer gemeinsamen optischen Messachse (B) erfolgen, die sich durch den Messraum (5) zwischen den beiden THz-Transceivern (3, 4) erstreckt, und
wobei ein Aussende-Zeitpunkt eines der beiden Transceiver (3,4) mit dem Mess-Zeitpunkt des anderen Transceivers (4,3) zumindest während der Leermessung und während einer Messung der Gesamtlaufzeit synchronisiert wird

14. Verfahren nach Anspruch 13, **dadurch gekennzeichnet, dass** als Messobjekt (12) ein Strang, z. B. ein Rohr oder Rechteckprofil kontinuierlich durch den Messraum (5) geführt wird, insbesondere ein einschichtiges Rohr (12) oder Rechteckprofil,

und kontinuierlich die Wanddicken (WD1, WD2) und/oder die mindestens eine Materialeigenschaft (n12, v12) ermittelt wird,
unter Heranziehung der mindestens einen gemeinsamen Leermessung.

**15.** Verfahren nach einem der Ansprüche 13 bis 14, **dadurch gekennzeichnet, dass** die Leermessungen (ST1) wiederholt erneut erfolgen, zur Korrektur oder zur Ermittlung von Änderungen des Transceiver-Abstandes (L).

**16.** Verfahren nach einem der Ansprüche 13 bis 15, **dadurch gekennzeichnet, dass** von beiden THz-Transceivern (3,4) jeweils eine Leermessung erfolgt und nachfolgend die Leermessungen verglichen und/oder gemittelt wird.

**17.** Verfahren nach einem der Ansprüche 13 bis 16, **dadurch gekennzeichnet, dass** ein Fehler (16) im Messobjekt (12) ermittelt wird

als Abschwächung der Intensität der Signalamplitude und/oder der Signalform eines Messsignals (M, M1, M2), in der Messung der Gesamt-Laufzeit (T_12) und/oder in der Messung des ersten Wandbereichs (12a) und/oder in der Messung des zweiten Wandbereichs (12c).

**18.** Verfahren nach einem der Ansprüche 13 bis 17, **dadurch gekennzeichnet, dass**

von dem ersten THz-Transceiver (3) und dem zweiten THz-Transceiver (4), eingesetzt werden

- gleiche Frequenzen, oder
- unterschiedliche und/oder sich überlappende Frequenzen oder Frequenzbänder, die unterschiedliche Teilbereiche einer Bandbreite darstellen,

wobei nachfolgend Messsignale des ersten THz-Transceivers (3) und des zweiten THz-Transceivers (4) als Auswertesignal zusammengeführt werden, eine Grundfrequenz des Auswertesignals bestimmt wird, um nachfolgend eine Berechnung einer oder mehrerer Schichtdicken erfolgt.

**Claims**

**1.** THz measuring device (2) for measuring a measuring object (12),
said THz measuring (2) device comprising:

a measuring space (5) for receiving a measuring object,
a first THz transceiver (3) designed to emit THz radiation (8) through the measuring space (5) and to receive THz radiation (8) ,
a second THz transceiver (4) designed to emit THz radiation (8) through the measuring space (5) and to receive THz radiation (8) emitted by the first THz transceiver (3),
wherein the two THz transceivers (3, 4) lie opposite one another and the measuring space (5) is formed between them,
a synchronising means (6) designed to synchronise emission times and/or measuring times of the two transceivers and to synchronise at least an emission time of one of the transceivers (3, 4) with the measuring time of the other of the transceiver (3, 4) at least during an empty measurement and during a measurement of the total time of flight,
a determination means (20) designed to receive a first measuring signal (M1)of the first THz transceiver (3) and a second measuring signal (M2) of the second THz transceiver (4) and to determine at least one layer thickness (WD1, WD2) and/or at least one layer property (n12, v12),
which can be a refraction index (n12) of the material of the measuring object or a speed of light (v12) of the THz radiation in the material of the measuring object,
said determination means (20) being designed to determine the layer thickness (WD1, WD2) and the at least one layer property (n12, v12) from the following measurements:

- an empty measurement, wherein the first THz transceiver (3) puts out the THz radiation (8) through the empty measuring space (5) towards the second THz transceiver (4) and the second THz transceiver (4) measures an empty time of flight (T_Leer),
- a measurement of the total time of flight, wherein the first THz transceiver (3) puts out the THz radiation (8) through the measuring space (5) and through the measuring object towards the second THz transceiver (4) and the second THz transceiver (4) measures a time of flight (T_12) with a measuring object, and
- at least two wall area measurements (ST3, ST4), wherein the first and the second THz transceiver (3, 4) puts out THz radiation (8) and detects the THz radiation (8) reflected at interfaces (14a, 14b) of at least one wall area (12a, 12b),

wherein the two transceivers 83, 4) are arranged opposite on a common optical measuring axis extending through the measuring space (5) and, further, are arranged and designed to emit the THz radiation (8) along the common optical measuring axis into or through measuring space (5),
wherein the determination means (20) is designed to control

- a first wall area measurement (ST3, ST4) by the first transceiver for measuring a first wall time of flight (T_WD1) and
- a second wall area measurement (ST3, ST4) by the second transceiver for measuring a second wall time of flight (T_WD2), and

wherein the determination means (20) is designed to determine the first wall thickness (WD1) of the first wall area (12a) and the second wall thickness (WD2) of the second wall area (12c) ,
wherein each of the two transceivers (3, 4) each carries out the wall area measurement of the wall area facing it and lying in front of it,

2. THz measuring device (2) according to claim 1,
   **characterised in that**
   the synchronising means (6) is designed as one of the following means:

   a) a reference oscillator for putting out a reference signal,
   b) a synchronised trigger for putting out a synchronising signal, and/or
   c) a network to which the two transceivers are connected.

3. THz measuring device (2) according to one of the preceding claims, **characterised in that** the determination means (20) is adapted to perform the first and second wall thickness measurement (ST3, ST4) successively by the two transceivers (3, 4).

4. THz measuring device (2) according to claim 3, **characterised in that** each of the two transceivers each carries out the wall area measurement of the wall area facing it and lying in front of it in a measuring step together with the measurement of the total time of flight.

5. THz measuring device (2) according to one of the preceding claims, **characterised in that** the determination means (20) is designed to determine both at least one layer thickness, in particular, two wall thicknesses (WD1, WD2) of the measuring object (12),
   and the at least one material property (n12, v12), in particular, a refraction index (n12) and/or a speed of light (v12) of the THz radiation (8) in the material of the measuring object (12).

6. THz measuring device (2) according to one of the preceding claims, **characterised in that**
   the THz measuring device (2) is designed to continuously carry out the measurement (ST2) of the total time of flight (T_12) and the measurements (ST3, ST4) of the first and second wall times of flight, and the determination means (20) is designed to continuously determine, from continuous measuring values (M1, M2) of the total time of flight (T_ 12) and the wall times of flight (T_WD1, T_WD2), the at least one layer thickness (WD1, WD2) and/or the at least one material property (12, v12), in particular, with a measuring object (12) passing continuously through the measuring space (5).

7. THz measuring device (2) according to one of the preceding claims, **characterised in that** the THz transceivers (3, 4) are arranged statically around the common measuring space (5),
   in particular, as a plurality of pairs (3, 4) each consisting of a first THz transceiver (3) and a second THz transceiver (4).

8. THz measuring device (2) according to one of the claims 1 through 6, **characterised in that** at least one pair of THz transceivers (3, 4) is provided on a frame (7) adjustably, in particular, reversing around the measuring space (5) or revolving around the measuring space (5) or rotating, for measuring the entire circumference of the measuring object (12) in the measuring space (5).

9. THz measuring device (2) according to one of the preceding claims, **characterised in that** the first and/or second THz transceiver (3, 4) is designed to emit and/or receive the THz radiation (8) parallel along the optical measuring axis (B), in particular, in a two-dimensional parallel manner.

10. THz measuring device (2) according to one of the preceding claims, **characterised in that** the determination means (20) is designed to determine an exterior diameter (AD) and/or interior diameter (ID) of the measuring object (12).

11. THz measuring device (2) according to one of the preceding claims, **characterised in that** the determination means (20) is designed to determine a first wall thickness WD1, a second wall thickness WD2, and a refraction index n of the measuring object in accordance with:

$$n = (T\_12 * c - L + (WD1+WD2)) / (WD1+WD2)$$

$$WD1 = c/2n * (T\_WD1)$$

$$WD2 = c/2n * (T\_WD2)$$

with L = T_Leer * c
wherein
WD1 = wall thickness 1
WD2 = wall thickness 2
n = refraction index of the pipe 12
T_12 = measuring value from the measurement with pipe 12
T_Leer = measuring value from empty measurement
L = distance of the transceivers
C = speed of light
T_WD1= wall time of flight through the first wall thickness 1 (WD1)
T_WD2 = wall time of flight through the second wall thickness 1 (WD2) (equation system GL4)

12. Measuring arrangement, comprising:
a THz measuring device (2) according to one of the preceding claims, and a measuring object (12) guided through the measuring space (5) of the THz measuring device (2), in particular, a profile (12), e.g. pipe (12) and/or rectangular profile and/or semi-open profile, e.g. curved trough.

13. THz measuring method for measuring a measuring object (12),

including at least the following steps:

- providing a THz measuring device (2) including at least one first THz transceiver (3), a second THz transceiver (4) arranged opposite of said first THz transceiver (3), whereby a measuring space (5) is formed between the two THz transceivers (Step ST0),
- empty measurement, emitting THz radiation (8) from one of the two THz transceivers (3) through the empty measuring space (5) towards the other THz transceiver (4), detecting the THz radiation (8) by the other THz transceiver (4) and determining an empty time of flight (T_Leer) (Step ST1),
- introducing a measuring object (12) into the measuring space (5),
- measuring a total time of flight (T_12) emitting THz radiation (8) from one of the THz transceivers (3) through the measuring space (5) and the measuring object (12) towards the other THz transceiver (4) and detecting the THz radiation (8) by the other THz transceiver (4) and determining a time of flight (T_12) with a measuring object (12) (Step ST2),
- emitting THz radiation (8) by the first THz transceiver (3) through the measuring space (5) towards a first wall area of the measuring object (12) and detecting the THz radiation (8) reflected off interfaces of the first wall area by the first THz transceiver (3) and determining a first wall time of flight (Step ST3),
- emitting THz radiation (8) by the second THz transceiver (4) through the measuring space (5) towards a second wall area (12c) of the measuring object (12) and detecting the THz radiation (8) reflected off interfaces (14a, 14b) of the second wall area (12c) by the second THz transceiver (4) and determining a second wall time of flight (T_WD2), (Step ST4),
- determining at least one layer thickness (WD1, WD2) and/or the at least one material property (n12, v12) by a determination means (20) designed to determine at least two layer thicknesses (WD1, WD2) and a layer property from the empty measurement (ST1), the measurement of the total time of flight (ST2), and the two measurements (ST3, ST4) of the first and second wall times of flight (T_WD1, T_WD2) (Step ST5), wherein the layer property is a refraction index (n12) of the material of the measuring object or a speed of light (v12) of the THz radiation in the material of the measuring object

wherein the measurements (Step ST1, Step ST2, Step ST3, Step ST4) of the two THz transceivers (3, 4) are carried out on a common optical measuring axis (B) which extends through the measuring space (5) between the two THz transceivers (3, 4),
wherein a emission time of one of the two transceivers (3, 4) is synchronized with the measuring time of the other transceiver (4, 3) at least during the empty measurement and the measurement of the total time of flight.

14. Method according to one of claim 13, **characterised in that** as measuring object (12) a strand, e.g. a pipe (12) or rectangular profile, is guided continuously through the measuring space (5), in particular, a single layer pipe or rectangular profile,

and the wall thicknesses (WD1, WD2) and/or said at least one material property (n12, v12) are determined continuously,
using said at least one common empty measurement.

15. Method according to one of claim 13 to 14, **characterised in that** the empty measurements (ST1) are carried out repeatedly anew, for correcting or for determining changes of the transceiver distance (L).

16. Method according to one of claim 13 to 15, **characterised in that** the empty measurement is carried out by both THz transceivers and subsequently a comparison and/or averaging is carried out.

17. Method according to one of claim 13 to 16, **characterised in that** a failure in the measuring object (12) is determined as an attenuation of the intensity of the signal amplitude and/or the signal shape of a measuring signal (M, M1, M2) in the measurement of the total time of flight (T_12) and/or in measurement of the first wall area (12a) and/or in the measurement of the second wall area (12c).

18. Method to one of claim 13 to 17, **characterised in that**

the first THz transceiver (3) and the second THz transceiver (4) are using

- equal frequencies, or
- different and/or overlapping frequencies and/or frequency bands representing different partial regions of a band width,

wherein, subsequently the measuring signals of the first THz transceiver (3) and the second THz transceiver (4) are combined to an evaluation signal, a fundamental frequency of the evaluation signal is determined, so as to subsequently carry out a calculation of one or more layer thicknesses.

**Revendications**

1. Dispositif (2) de mesure THz pour mesurer un objet de mesure (12), le dispositif (2) de mesure THz comprenant :

un espace de mesure (5) destiné à recevoir un objet de mesure (12),
un premier émetteur-récepteur THz (3) conçu pour émettre un rayonnement THz (8) à travers l'espace de mesure (5) et pour recevoir un rayonnement THz (8),
un second émetteur-récepteur THz (4) conçu pour émettre un rayonnement THz (8) à travers l'espace de mesure (5) et pour recevoir le rayonnement THz émis par le premier émetteur-récepteur THz (3), les deux émetteurs-récepteurs THz (3, 4) étant disposés en vis-à-vis et l'espace de mesure (5) étant formé entre eux,
un dispositif de synchronisation (6) conçu pour synchroniser les instants d'émission et/ou les instants de mesure des deux émetteurs-récepteurs (3, 4), et au moins un instant d'émission de l'un des deux émetteurs-récepteurs (3, 4) avec l'instant de mesure de l'autre émetteur-récepteur (3, 4) au moins pendant une mesure à vide et pendant une mesure du temps de transit total,
un dispositif de détermination (20) conçu pour enregistrer un premier signal de mesure (M1) du premier émetteur-récepteur THz (3) et un second signal de mesure (M2) du second émetteur-récepteur THz (4) et à déterminer au moins une épaisseur de couche (WD1, WD2) et/ou au moins une propriété de couche, qui est un indice de réfraction du matériau de l'objet de mesure (n12) ou une vitesse de la lumière du rayonnement THz dans le matériau de l'objet de mesure (v12),

dans lequel le dispositif de détermination (20) est conçu pour déterminer l'épaisseur de couche (WD1, WD2) et l'au moins une propriété de couche (n12, v12) à partir des mesures suivantes :

- une mesure à vide, dans laquelle le premier émetteur-récepteur THz (3) émet le rayonnement THz (8) à travers l'espace de mesure (5) vide vers le deuxième émetteur-récepteur THz (4) et le second émetteur-récepteur THz (4) mesure un temps de transit à vide (T_Leer),
- une mesure du temps de transit total, dans laquelle le premier émetteur-récepteur THz (3) émet le rayonnement THz (8) à travers l'espace de mesure (5) et à travers l'objet de mesure (12) vers le second émetteur-récepteur THz (4) et le second émetteur-récepteur THz mesure un temps de transit avec l'objet de mesure (T_12), et
- au moins deux mesures de zone de paroi (ST3, ST4), dans lesquelles les premier et second émetteurs-récepteurs (3, 4) émettent un rayonnement THz (8) et détectent le rayonnement THz réfléchi aux interfaces (14a, 14b) d'au moins une zone de paroi (12a, 12b),

dans lequel les deux émetteurs-récepteurs (3, 4) sont disposés en vis-à-vis sur un axe de mesure (B) optique commun s'étendant à travers l'espace de mesure (5), et
dans lequel les deux émetteurs-récepteurs (3, 4) sont en outre disposés et conçus pour émettre le rayonnement THz (8) le long de l'axe de mesure (B) optique commun dans ou à travers l'espace de mesure (5),
dans lequel le dispositif de détermination (20) est conçu pour commander

- une première mesure de zone de paroi (ST3, ST4) à l'aide du premier émetteur-récepteur (3) à des fins de mesure d'un premier temps de transit de paroi (T_WD1) et
- une seconde mesure de zone de paroi (ST3, ST4) à l'aide du second émetteur-récepteur (4) à des fins de mesure d'un second temps de transit de paroi (T_WD2),

et dans lequel le dispositif de détermination (20) est conçu pour déterminer la première épaisseur de paroi (WD1) de la première zone de paroi (12a) et la seconde épaisseur de paroi (WD2) de la seconde zone de paroi (12c), dans lequel chacun des deux émetteurs-récepteurs (3, 4) réalise respectivement la mesure de zone de paroi de la zone de paroi qui lui fait face et qui se trouve devant lui.

2. Dispositif (2) de mesure THz selon la revendication 1, **caractérisé en ce que** le dispositif de synchronisation (6) est conçu en tant que l'un des dispositifs suivants :

a) un oscillateur de référence pour délivrer un signal de référence (S),
b) un déclencheur synchronisé (6) pour délivrer un signal de synchronisation (S), et/ou
c) un réseau, par exemple un système de bus, auquel les deux émetteurs-récepteurs (3, 4) sont connectés.

3. Dispositif (2) de mesure THz selon l'une des revendications précédentes, **caractérisé en ce que** le dispositif de détermination (20) est conçu pour réaliser successivement la première mesure de zone de paroi (ST3, ST4) et la seconde mesure de zone de paroi (ST3, ST4) à l'aide des deux émetteurs-récepteurs (3, 4).

4. Dispositif (2) de mesure THz selon la revendication 3, **caractérisé en ce que** chacun des deux émetteurs-récepteurs (3, 4) réalise, en une étape de mesure, la mesure de la zone de paroi qui lui fait face et qui se trouve devant lui, ainsi que la mesure du temps de transit total.

5. Dispositif (2) de mesure THz selon l'une des revendications précédentes, **caractérisé en ce que** le dispositif de détermination (20) est conçu pour déterminer à la fois au moins une épaisseur de couche, en particulier deux épaisseurs de paroi (WD1, WD2) de l'objet de mesure (12),
ainsi qu'au moins une propriété de matériau (n12, v12), en particulier un indice de réfraction (n12) et/ou une vitesse de la lumière (v12) du rayonnement THz (8) dans le matériau de l'objet de mesure (12).

6. Dispositif (2) de mesure THz selon l'une des revendications précédentes, **caractérisé en ce que**

le dispositif de mesure THz (2) est conçu pour réaliser de façon continue la mesure (ST2) du temps de transit total

EP 4 160 139 B1

(T_12) et les mesures (ST3, ST4) des premier et second temps de transit de paroi (WD1, WD2),
et le dispositif de détermination (20) est conçu pour déterminer de façon continue, à partir des valeurs de mesure (M1, M2) continues du temps de transit total (T_ 12) et des temps de transit de paroi (T_WD1, T_WD2), au moins une épaisseur de couche (WD1, WD2) et/ou au moins une propriété de matériau (n12, v12), en particulier pour un objet de mesure (12) traversant en continu l'espace de mesure (5).

7. Dispositif (2) de mesure THz selon l'une des revendications précédentes, **caractérisé en ce que** les émetteurs-récepteurs THz (3, 4) sont disposés de manière statique autour de l'espace de mesure (5) commun, en particulier sous la forme d'une ou plusieurs paires (3, 4), par exemple deux ou trois paires, composées chacune d'un premier émetteur-récepteur THz (3) et d'un second émetteur-récepteur THz (4).

8. Dispositif (2) de mesure THz selon l'une des revendications 1 à 6, **caractérisé en ce qu'**au moins une paire d'émetteurs-récepteurs THz (3, 4) est prévue de manière réglable sur un châssis (7), en particulier de manière réversible autour de l'espace de mesure (5) ou de manière circulaire ou rotative autour de l'espace de mesure (5), pour la mesure complète de l'objet de mesure (12) dans l'espace de mesure (5).

9. Dispositif (2) de mesure THz selon l'une des revendications précédentes, **caractérisé en ce que** le premier et/ou le second émetteur-récepteur THz (3, 4) est conçu pour émettre et/ou recevoir le rayonnement THz (8) parallèlement le long de l'axe de mesure optique (B), en particulier en parallèle de manière bidimensionnelle.

10. Dispositif (2) de mesure THz selon l'une des revendications précédentes, **caractérisé en ce que** le dispositif de détermination (20) est conçu pour déterminer un diamètre extérieur (AD) et/ou un diamètre intérieur (ID) de l'objet de mesure (12).

11. Dispositif (2) de mesure THz selon l'une des revendications précédentes, **caractérisé en ce que** le dispositif de détermination (20) est conçu pour déterminer une première épaisseur de paroi WD1, une seconde épaisseur de paroi WD1 et un indice de réfraction n de l'objet de mesure à partir de

$$n = (T\_12 * c - L + (WD1+WD2)) / (WD1+WD2)$$

$$WD1 = c/2n * (T\_WD1)$$

$$WD2 = c/2n * (T\_WD2)$$

$$avec\ L = T\_Leer * c$$

dans lequel

WD1 = épaisseur de paroi 1
WD2 = épaisseur de paroi 2
n = indice de réfraction du tube 12
T_12 = valeur de mesure avec le tube 12
T_Leer = valeur de mesure à vide
L = distance par rapport à l'émetteur-récepteur
C = vitesse de la lumière
T_WD1 = temps de transit de paroi à travers la première épaisseur de paroi 1 (WD1)
T_WD2 = temps de transit de paroi à travers la seconde épaisseur de paroi 2 (WD2) (système d'équations GL4)

12. Agencement de mesure (1) comprenant :

un dispositif (2) de mesure THz selon l'une des revendications précédentes, et
un objet de mesure (12) guidé à travers l'espace de mesure (5) du dispositif (2) de mesure THz, en particulier un profil (12), par exemple un tube (12), et/ou un profil rectangulaire et/ou un profil semi-ouvert, par exemple une gouttière cintrée.

19

**13.** Procédé de mesure THz pour mesurer un objet de mesure (12), comprenant au moins les étapes suivantes :

- fourniture d'un dispositif (2) de mesure THz comprenant au moins un premier émetteur-récepteur THz (3), un second émetteur-récepteur THz (4) disposé en vis-à-vis par rapport au premier émetteur-récepteur THz (3) sur un axe optique (B) commun, un espace de mesure (5) étant formé entre les deux émetteurs-récepteurs THz (3, 4) (étape ST0),
- mesure à vide, émission d'un rayonnement THz (8) depuis l'un des émetteurs-récepteurs THz (3) à travers l'espace de mesure (5) vide vers l'autre émetteur-récepteur THz (4), détection du rayonnement THz (8) par l'autre émetteur-récepteur THz (4) et détermination d'un temps de transit à vide (T_Leer) (étape ST1),
- introduction d'un objet de mesure (12) dans l'espace de mesure (5),
- mesure d'un temps de transit total (T_12) par émission d'un rayonnement THz (8) depuis l'un des émetteurs-récepteurs THz (3) à travers l'espace de mesure (5) et l'objet de mesure (12) vers l'autre émetteur-récepteur THz (4) et détection du rayonnement THz (8) par l'autre émetteur-récepteur THz (4) et détermination d'un temps de transit avec l'objet de mesure (T_12) (étape ST2),
- émission d'un rayonnement THz (8) depuis le premier émetteur-récepteur THz (3) à travers l'espace de mesure (5) vers une première zone de paroi (12a) de l'objet de mesure (12) et détection du rayonnement THz (8) réfléchi par les interfaces (14a, 14b) de la première zone de paroi (12a) par le premier émetteur-récepteur THz (3) et détermination d'un premier temps de transit de paroi (T_WD1), (étape ST3)
- émission d'un rayonnement THz (8) depuis le second émetteur-récepteur THz (4) à travers l'espace de mesure (5) vers une seconde zone de paroi (12c) de l'objet de mesure (12) et détection du rayonnement THz (8) réfléchi par les interfaces (14a, 14b) de la seconde zone de paroi (12c) par le second émetteur-récepteur THz (4) et détermination d'un second temps de transit de paroi (T_WD2), (étape ST4)
- détermination d'au moins une épaisseur de couche (WD1, WD2) et/ou d'au moins une propriété de matériau (n12, c12) à l'aide d'un dispositif de détermination qui est conçu pour déterminer au moins deux épaisseurs de couche et une propriété de couche à partir de la mesure à vide (ST1), de la mesure du temps de transit total (ST2) et des deux mesures (ST3, ST4) des premier et second temps de transit de paroi (T_WD1, T WD2) (étape ST5), la propriété de couche étant un indice de réfraction du matériau de l'objet de mesure (n12) ou une vitesse de la lumière du rayonnement THz dans le matériau de l'objet de mesure (v12),

dans lequel les mesures (étape ST1, étape ST2, étape ST3, étape ST4) des deux émetteurs-récepteurs THz (3, 4) sont effectuées sur un axe de mesure optique (B) commun qui s'étend à travers l'espace de mesure (5) entre les deux émetteurs-récepteurs THz (3, 4), et

dans lequel l'instant d'émission de l'un des deux émetteurs-récepteurs (3, 4) est synchronisé avec l'instant de mesure de l'autre émetteur-récepteur (4, 3) au moins pendant la mesure à vide et pendant une mesure du temps de transit total.

**14.** Procédé selon la revendication 13, **caractérisé en ce qu'**une barre, en tant qu'objet de mesure (12), par exemple un tube ou un profilé rectangulaire, est guidée en continu à travers l'espace de mesure (5), en particulier un tube monocouche (12) ou un profilé rectangulaire,

et les épaisseurs de paroi (WD1, WD2) et/ou l'au moins une propriété de matériau (n12, v12) sont déterminées en continu,
à l'aide de l'au moins une mesure à vide commune.

**15.** Procédé selon l'une des revendications 13 à 14, **caractérisé en ce que** les mesures à vide (ST1) sont répétées afin de corriger ou de déterminer les modifications de la distance par rapport aux émetteurs-récepteurs (L).

**16.** Procédé selon l'une des revendications 13 à 15, **caractérisé en ce qu'**une mesure à vide est effectuée par chacun des deux émetteurs-récepteurs THz (3, 4), puis les mesures à vide sont comparées et/ou moyennées.

**17.** Procédé selon l'une des revendications 13 à 16, **caractérisé en ce qu'**un défaut (16) dans l'objet de mesure (12) est déterminé

en tant qu'une atténuation de l'intensité de l'amplitude de signal et/ou de la forme de signal d'un signal de mesure (M, M1, M2),
dans la mesure du temps de transit total (T_12) et/ou dans la mesure de la première zone de paroi (12a) et/ou dans la mesure de la seconde zone de paroi (12c).

**18.** Procédé selon l'une des revendications 13 à 17, **caractérisé en ce que**

depuis le premier émetteur-récepteur THz (3) et le second émetteur-récepteur THz (4) seront utilisées

- des fréquences identiques, ou
- des fréquences différentes et/ou se chevauchant ou des bandes de fréquences représentant différentes parties d'une largeur de bande,

dans lequel les signaux de mesure du premier émetteur-récepteur THz (3) et du second émetteur-récepteur THz (4) sont ensuite combinés pour former un signal d'évaluation, une fréquence fondamentale du signal d'évaluation est déterminée afin de procéder ensuite au calcul d'une ou plusieurs épaisseurs de couche.

Fig. 1

Fig. 2

Fig. 3

Fig. 4

Fig. 5

**Fig. 6**

**Fig. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016139155 A1
- DE 102017125740 A1
- DE 102018124175 A1
- US 20210262792 A1
- US 20120032083 A1
- US 20160315716 A1
- US 20120217403 A1
- DE 102020123992 B3
- WO 2018202696 A1